# EUROPÄISCHE PATENTSCHRIFT

(11) **EP 3 859 422 B1**
(45) Veröffentlichungstag und Bekanntmachung des Hinweises auf die Patenterteilung: **31.08.2022**
(21) Anmeldenummer: 21152049.9
(22) Anmeldetag: 18.01.2021
(51) Int. Cl.: G02B 17/08, F41G 7/00, F41G 7/22, G02B 7/00, G02B 26/06

(54) **SUCHOPTIK, SUCHKOPF UND LENKFLUGKÖRPER**
SEEKER LENS, SEEKER HEAD AND GUIDED MISSILE
OPTIQUE DE RECHERCHE, TÊTE DE RECHERCHE ET MISSILE

(30) Priorität: 28.01.2020 DE 102020000482
(43) Veröffentlichungstag der Anmeldung: 04.08.2021
(73) Patentinhaber: Diehl Defence GmbH & Co. KG, 88662 ÜBERLINGEN (DE)
(72) Erfinder: Möller, Jens, 88696 Owingen (DE); Münzhuber, Franz, 78315 Radolfzell am Bodensee (DE); Rotter, Philipp, 90571 Schwaig b. Nürnberg (DE)
(74) Vertreter: Diehl Patentabteilung

(56) Entgegenhaltungen:
- JP-A- H06 313 846
- US-A1- 2009 141 344
- US-B1- 6 201 230

## Beschreibung

Die zu Grunde liegende Erfindung betrifft insbesondere eine Suchoptik, einen Flugkörpersuchkopf und einen Flugkörper mit einer solchen Suchoptik.

Zielsuchende Lenkflugkörper weisen in der Regel einen Lenkflugkörpersuchkopf mit einer Suchoptik bzw. Eingangsoptik auf. Ein Lenkflugkörpersuchkopf für einen Lenkflugkörper ist beispielsweise aus der EP 3 048 410 A1 bekannt.

Für eine präzise Zielerfassung und Zielverfolgung ist eine Abschirmung der Suchoptik gegenüber äußeren Einflüssen von entscheidender Bedeutung.

Aus der JP 6 313 846 A2 ist ein optisches System in Form eines Cassegrain-Teleskops mit einem Primär- und einem Sekundärspiegel bekannt. Die beiden Spiegel befinden sich innerhalb gegenüberliegender Endbereiche eines zylinderförmigen Tubus. Der Sekundärspiegel wird dabei über eine Stützstruktur innerhalb des Tubus in seiner Position gehalten. Diese Stützstruktur weist einen ringförmigen Körper und drei, sich ausgehend vom ringförmigen Körper bis an die Innenwandung des Tubus erstreckende Stützstreben. Die Stützstreben können einen dreistückigen Aufbau mit einem zentralen Stück aufweisen, an dessen Enden sich unterschiedliche Endstücke anschließen. Bei dem zwischen der Innenwand des Tubus (1) und dem einen Ende des zentralen Stücks (7a) befindlichen Endstück handelt es sich um ein gesondert ausgebildetes Verschiebeelement S, beispielsweise um ein piezoelektrisches Element (20), bei dem anderen Endstück um einen Dehnungsmessstreifen.

Vor diesem Hintergrund ist es eine Aufgabe der Erfindung, eine verbesserte Suchoptik für einen Flugkörper insbesondere Lenkflugkörper, sowie einen Flugkörpersuchkopf bzw. Lenkflugkörpersuchkopf, und einen Flugkörper bzw. Lenkflugkörper mit einer solchen Suchoptik anzugeben, die insbesondere vergleichsweise robust gegenüber äußeren Einflüssen ist.

Diese Aufgabe wird gelöst durch eine Suchoptik, einen Flugkörpersuchkopf, insbesondere Lenkflugkörpersuchkopf, sowie einen Flugkörper, insbesondere Lenkflugkörper, gemäß den unabhängigen Ansprüchen. Ausgestaltungen der Erfindung ergeben sich aus den abhängigen Ansprüchen sowie aus den nachfolgend beschriebenen Ausführungsformen und Ausführungsbeispielen.

In einer Ausführungsform ist eine Suchoptik für einen (Lenk-)Flugkörpersuchkopf vorgesehen. Die Suchoptik umfasst ein optisches System, beispielsweise zumindest eine Eingangsoptik, mit zumindest einem bezüglich einer optischen Achse positioniert ausgerichtetem, in zumindest einer Optikfassung gehalterten optischen Element. Die Optikfassung kann ausgebildet sein zur Halterung eines oder mehrerer optischer Elemente, insbesondere gemäß vorgegebenen Positionen bezüglich der bzw. relativ zu der/den optischen Achse(n) der Suchoptik. Beispielsweise kann eine der zumindest einen Optikfassungen ausgebildet sein als eine Halterung oder Haltestruktur eingerichtet zur Halterung, Fixierung und Positionierung eines oder mehrerer zumindest einer optischen Stufe einer zwei- oder mehrstufigen Optik zugeordneter optischer Elemente.

Die Optikfassung kann so eingerichtet sein, dass diese ein oder mehrere optische Elemente der Suchoptik in vorgegebener Soll-Ausrichtung, Soll-Beabstandung und/oder Soll-Position zueinander bzw. relativ zur optischen Achse haltert. Allerdings kann es ohne geeignete Gegenmaßnahmen beispielsweise aufgrund thermischer Expansion oder Kontraktion am Material der Optikfassung bei Änderungen der Umgebungstemperatur bzw. anderweitigen Effekten, wie beispielsweise Herstellungstoleranzen, dazu kommen, dass die Position der optischen Elemente nicht mehr der vorgegebenen Soll-Ausrichtung, Soll-Beabstandung bzw. Soll-Position entspricht. Solche Abweichungen beeinträchtigen die Abbildungseigenschaften der Suchoptik und können zu Fehlern in der Zielerfassung und Zielverfolgung führen.

Insbesondere um derartigen Abweichungen entgegenwirken zu können, umfasst die hierin vorgeschlagene Optikfassung der Suchoptik einen aktiv formveränderbaren, d.h. responsiven, Werkstoff.

Die Optikfassung mit responsivem Werkstoff ist derart ausgebildet, dass durch den responsiven Werkstoff die Lage des optischen Elements im optischen System relativ zur optischen Achse adaptiv veränderbar, insbesondere einstellbar, ist, und/oder dass durch den responsiven Werkstoff die Form des optischen Elements adaptiv veränderbar bzw. einstellbar ist. Insbesondere kann der responsive Werkstoff derart ausgebildet sein, beispielsweise durch geeignete Implementierung in oder an der Optikfassung, dass die Lage, Position, Ausrichtung und/oder Orientierung des optischen Elements parallel, quer, insbesondere radial, und/oder in Umfangsrichtung (rotatorisch) zur optischen Achse adaptiv veränderbar ist. Dabei kann die Lage, insbesondere hinsichtlich Ausrichtung und Position, relativ zur optischen Achse, bzw. zur Abbildungsachse und/oder die Form des/der optischen Elemente dadurch verändert, insbesondere angepasst werden, dass durch den responsiven Werkstoff eine Formänderung der Optikfassung bewirkt wird. Beispielsweise kann der responsive Werkstoff Piezokristalle umfassen, die bei Beaufschlagung mit Spannung eine, beispielsweise lokal spezifische, Formänderung der Optikfassung bewirken.

Basierend auf Formänderungen der Optikfassung können beispielsweise Position, Ausrichtung oder Orientierung der optischen Elemente relativ zur optischen Achse, zur Abbildungsachse bzw. zur Bildebene angepasst werden. Solche Anpassungen können in einem Kugelkoordinatensystem mit einer zur optische Achse kollinearen Polachse beispielsweise beschrieben werden durch Änderungen in der Position bzw. Lage in Radialrichtung bezüglich des Koordinatenursprungs, durch Änderungen hinsichtlich des Polarwinkels und/oder durch Änderungen hinsichtlich des Azimutwinkels des Kugelkoordinatensystems. Insbesondere können solche Anpassungen das jeweilige optische Element als Ganzes betreffen, d.h. jedes Volumenelement des optischen Elements erfährt im Wesentlichen die gleiche Koordinatenänderung. Ferner ist es möglich, dass Koordinatenänderungen für unterschiedliche Volumenelemente unterschiedlich sind. Letzteres kann beispielsweise dann der Fall sein, wenn eine aktive Formänderung des responsiven Material (auch) eine Schwenkung des optischen Elements relativ zur optischen Achse bewirkt.

Änderungen in der Form des oder der optischen Elemente sind insbesondere möglich, wenn jeweilige optische Elemente derart formveränderbar sind, dass diese durch Kräfte, die bei der aktiven Formänderung der Optikfassung auf das/die optischen Elemente wirken, verformt werden.

Unter "adaptiv veränderbar" soll im Rahmen der Erfindung insbesondere verstanden werden, dass die Optikfassung oder zumindest ein Teilbereich oder Abschnitt der Optikfassung, der den responsiven Werkstoff umfasst oder aus diesem gebildet ist, an sich ändernde äußere Gegebenheiten aktiv anpassbar ist und/oder dass Formänderungen der Optikfassung, die durch, insbesondere sich ändernde, äußere Einflüsse, wie z.B. Temperaturänderungen, Beschleunigungskräfte u.a, hervorgerufen werden, zumindest in gewissem Umfang aktiv, insbesondere durch entsprechende Steuer- oder Regelmechanismen oder-algorithmen, kompensierbar sind. Insbesondere soll "adaptiv veränderbar" dahingehend verstanden werden, dass durch thermisch bedingte Expansion/Kontraktion der Optikfassung verursachte Formänderungen zumindest in gewissem Umfang aktiv kompensierbar sind, insbesondere dahingehend, dass eine durch die Formänderung der Optikfassung bewirkte Veränderung der Abbildungseigenschaften des optischen Systems kompensiert bzw. korrigiert werden kann. Beispielsweise kann die Optikfassung derart ausgebildet sein, insbesondere kann das responsive Material derart eingerichtet sein, dass thermisch bedingte Formänderungen in einem Temperaturbereich zwischen - 55°C und +85°C kompensierbar sind. Erreicht werden kann dies beispielsweise durch invers piezoaktive Materialien, z.B. Piezokristalle oder Piezoelemente, die an oder in dem Material der Optikfassung vorgesehen sind. Bei Verwendung von invers piezoaktiven Materialien können Formänderungen der Optikfassung, bei geeigneter elastischer Verformbarkeit der Optikfassung, beispielsweise durch den inversen Piezoeffekt (z.B. bei Beaufschlagung des invers piezoaktiven Materials durch Spannung) induziert werden.

Unter einem "aktiv formveränderbaren Material", d.h. einem "responsiven" Material, soll insbesondere ein Material verstanden werden, das, beispielsweise bei Beaufschlagung mit einem elektrischen Feld, Strom und/oder Spannung, und/oder bei Beaufschlagung mit einem magnetischen Feld, als Antwort zur Beaufschlagung aus sich heraus fähig ist, seine Form zu ändern, insbesondere ohne dass für die Änderung der Form von einer materialfremden Quelle erzeugte, mechanische Umformkräfte erforderlich wären. Insbesondere soll unter "responsiv" auch verstanden werden, dass die Form des Materials steuerungstechnisch oder regelungstechnisch verändert, insbesondere angepasst bzw. adaptiert werden kann. Mit einem entsprechenden responsiven Material ist es beispielsweise möglich, sich ändernde Umgebungsbedingungen, z.B. Temperaturänderungen, durch eine aktiv adaptive Formänderung des responsiven Materials zumindest teileweise zu kompensieren. Wie bereits erwähnt, eignen sich zur Umsetzung eines responsiven Materials beispielsweise, jedoch nicht ausschließlich, invers piezoaktive Materialien.

Die Optikfassung kann als Ganzes aus dem responsiven Material hergestellt sein. Alternativ ist es auch möglich, dass lediglich Abschnitte bzw. Segmente der Optikfassung aus dem responsiven Material hergestellt sind oder ein solches Material umfassen oder daraus bestehen.

Mit der vorgeschlagenen Lösung kann insbesondere eine gegenüber äußeren Einflüssen, wie Temperaturänderungen, Beschleunigungskräften u.ä, robuste Suchoptik bereitgestellt werden. Insbesondere können, bei geeigneter Anordnung, Bereitstellung bzw. Integration des responsiven Materials, etwaige, durch thermische Expansion bzw. thermische Kontraktion verursachte Formänderungen der Optikfassung und damit einhergehende Lage- und Positionsänderungen des oder der optischen Elemente zumindest teilweise kompensiert werden, insbesondere derart, dass für das zu Grunde liegende optische System optimale Abbildungseigenschaften wiederhergestellt werden können. Insbesondere ist es möglich, das responsive Material derart in oder mit der Optikfassung zu integrieren oder daran vorzusehen bzw. die Optikfassung aus dem responsiven Material herzustellen, dass Lage-, Ausrichtungs-, Positions- und/oder Formänderungen der optischen Elemente im jeweiligen optischen System kompensierbar sind. Insbesondere ist es bei geeigneter Integration bzw. Ausbildung des responsiven Materials möglich, Lageänderungen von optischen Elementen relativ zueinander, insbesondere Abstandsänderungen zwischen optischen Elementen, zumindest teilweise zu kompensieren. Darüber hinausgehend ermöglicht das responsive Material nicht nur eine Kompensation von Umwelteinflüssen, sondern es kann auch eingesetzt werden, um Herstellungstoleranzen und/oder Justagetoleranzen bei der Positionierung der optischen Elemente zumindest teilweise zu kompensieren. Beispielsweise kann nach Herstellung des optischen Systems, insbesondere nach Montage der optischen Elemente und Zusammensetzung des optischen Systems das optische System zumindest teilweise auf Grundlage des responsiven Materials kalibriert werden.

In einer Ausführungsform kann die Optikfassungein mit Fasern verstärktes Werkstoffmaterial, insbesondere ein mit Fasern verstärktes Kunststoffmaterial umfassen. Erfindungsgemäß umfasst der formveränderbare Werkstoff der Optikfassung ein mit Fasern verstärktes Kunststoffmaterial. In Ausgestaltungen ist es möglich, dass die Optikfassung, d.h. die Optikfassung als solche, oder ein oder mehrere Abschnitte der Optikfassung, aus dem mit Fasern verstärkten Werkstoffmaterial hergestellt sind.

Bei dem mit Fasern verstärkten Werkstoffmaterial, insbesondere ein Kunststoffmaterial, kann das Werkstoffmaterial eine Matrix bilden, in welches die Fasern eingebettet sind, beispielsweise gemäß einer vorgegebenen Vorzugsrichtung.

Faserverstärkte Werkstoffe eignen sich insbesondere zur Herstellung von leichtbauenden Optikfassungen mit vergleichsweise hoher mechanischer Stabilität, bieten jedoch noch ausreichend Spielraum für aktive Formveränderungen. Insbesondere können mit Fasern verstärkte Kunststoffe vergleichsweise einfach mit adaptiv aktiv formveränderbaren Eigenschaften ausgestattet werden, beispielsweise durch Integration von invers piezoaktiven Materialien, wie z.B. piezoelektrischen Kristallen, elektrostriktiven Materialien und/oder magnetostriktiven Materialien. Solche Materialien, können beispielsweise in den Werkstoff entsprechend einer vorgegebenen (Dichte-) Verteilung, Ausrichtung usw. integriert bzw. eingebettet werden oder an einer Oberfläche oder oberflächennahen Schicht der Optikfassung vorgesehen werden, um jeweils gewünschte adaptiven Eigenschaften der Optikfassung auf Mikro- und/oder Makroebene zu erhalten. Entsprechend der Erfindung sind die Materialien in den aktiv formveränderbaren Werkstoff eingebettet oder an einer Oberfläche oder oberflächennahen Schicht der Optikfassung vorgesehen.

In Ausführungsformen kommen als Fasern insbesondere Kohlenstofffasern, Glasfasern und Basaltfasern in Betracht. Durch Kohlenstoffasern kann u.a. die Leitfähigkeit als eine physikalische Eigenschaft des Werkstoffs beeinflusst werden. Eine erhöhte Leitfähigkeit kann beispielswiese vorteilhaft sein, wenn zur adaptiven Veränderbarkeit der Form der Optikfassung invers piezoaktive Materialien, elektrostriktive Materialien, wie z.B. piezoelektrische Kristalle, eingebettet werden. Durch Glas- und Basaltfasern können beispielsweise (insbesondere lokal) zur strukturellen Verstärkung beitragen.

In Ausführungsformen kann das Werkstoffmaterial zumindest ein aus folgender Gruppe ausgewähltes Material umfassen: Epoxidharze, Vinylesterharze, Polyuretane, Polyetherketone, Polyetheretherketone. Möglich ist es im Rahmen von Ausgestaltungen auch, dass das Werkstoffmaterial als solches aus zumindest einem aus der vorgenannten Gruppe ausgewählten Material oder Mischungen derselben besteht. Das Epoxidharz kann insoweit als eine Matrix zur Einbettung der Fasern verwendet werden. Insbesondere kann das Werkstoffmaterial, z.B. ein Kunststoffmaterial wie beispielsweise Epoxidharz, als eine Matrix verwendet werden, in die weitere Werkstoffe oder Werkstoffgemische, wie z.B. invers piezoaktive, elektrostriktive und/oder magnetostriktive Materialien oder Kristalle, eingebettet sind oder werden, durch welche die adaptiv formveränderbaren Eigenschaften der Optikfassung umgesetzt werden bzw. sind.

Gemäß der Erfindung bildet der aktiv formveränderbare Werkstoff eine Aktoreinheit, die zur aktiven Formveränderung zumindest ein invers piezoaktives Material, zumindest ein elektrostriktives Material und/oder zumindest ein magnetostriktives Material umfasst.

Die invers piezoaktiven, elektrostriktiven und/oder magnetostriktiven Materialien sind gemäß der Erfindung zumindest in den aktiv formveränderbaren Werkstoffl eingebettet, aus dem die Optikfassung als Ganzes oder Teile davon hergestellt sind. Die Einbettung kann dabei derart umgesetzt sein, dass die invers piezoaktiven, elektro- und/oder magnetostriktiven Materialien gemäß einer vorgegebenen Verteilung, Ausrichtung und/oder Dichte im Werkstoffmaterial vorliegen, so dass die jeweils gewünschte adaptive Formveränderbarkeit der Optikfassung entsprechend eingestellt werden kann. Die Einbettung kann dabei so erfolgen, dass die Optikfassung als Ganzes, d.h. auf Makroebene, oder lokal spezifisch, insbesondere auf Mikroebene, formveränderbar ist.

Wie bereits erwähnt, kommt neben oder zusätzlich zu einer Einbettung entsprechend der Erfindung auch in Frage, dass entsprechende Materialien an einer Oberfläche der Optikfassung vorhanden sind.

In Ausgestaltungen kann der aktiv formveränderbare Werkstoff eine Aktoreinheit bilden, die als Aktorelement oder Aktorelemente invers piezoaktive Materialien, insbesondere piezoelektrische Kristalle und/oder Fasern umfasst, die insbesondere gemäß zumindest einer Vorzugsrichtung ausgerichtet im Volumenmaterial der Optikfassung eingebettet sind. Die Einbettung kann dabei über das Volumenmaterial gleichmäßig oder lokal spezifisch erfolgen, insbesondere derart, dass die jeweils erforderliche Formveränderbarkeit der Optikfassung umgesetzt werden kann.

Eine gleichmäßige Einbettung, z.B. eine im Wesentlichen gleichverteilte Einbettung kommt insbesondere dann in Betracht, wenn das Werkstoffmaterial der Optikfassung als solches, zumindest in gewissem Umfang, bereits adaptive Verformungseigenschaften zeigt. Zeigt das Werkstoffmaterial als solches keine oder im Wesentlichen keine adaptiven Verformungseigenschaften kann die Einbettung der Aktorelemente vorzugsweise gemäß einer lokal spezifischen Orientierung und/oder lokal spezifischen Verteilung vorliegen.

Insbesondere kann vorgesehen sein, dass die Aktoreinheit einen integralen Bestandteil der Optikfassung bildet. Die Aktoreinheit als solche kann derart eingerichtet sein, beispielsweise durch geeignet ausgebildete Schnittstellen, dass die Aktoreinheit über Führungssignale bzw. Steuer- oder Regelsignale einer zugeordneten Steuer- oder Regeleinheit ansteuerbar ist, und, basierend auf den Steuersignalen, eine definierte Formänderung bzw. Positionsänderung des oder der optischen Elemente bewirkt.

Eine entsprechende Steuereinheit kann beispielsweise eingerichtet sein, Temperaturwerte zu erfassen oder gemessene Temperaturwerte zu empfangen, und die Temperaturwerte oder davon abgeleitete Werte/Größen als Führungsgröße der Steuerung zu verwenden. Entsprechendes gilt für andere äußere Einflüsse, wie beispielsweise Beschleunigungskräfte, wobei hier geeignete Beschleunigungssensoren verwendet werden können.

Zur Erfassung der Temperatur können eine oder mehrere Temperatursensoren vorgesehen, sein, die zur Temperaturerfassung mit der Optikfassung gekoppelt sein können. Als Temperatursensor können beispielsweise ein oder mehrere Thermoelemente, Widerstandsthermometer und/oder Halbleiter-Temperatursensoren verwendet werden. Auch ist es möglich, einen oder mehrere faseroptische Temperatursensoren (z.B. Glasfasern als lineare Sensoren) vorzusehen, die auf der Optikfassung angebracht oder zumindest teilweise in diese eingebettet sind. Beschleunigungswerte können beispielsweise durch geeignete Beschleunigungssensoren ermittelt werden.

Eine entsprechende Regeleinheit kann beispielsweise derart eingerichtet sein, Daten zur Form und/oder 2D- oder 3D Struktur der Optikfassung zu erfassen oder zu empfangen, und diese Daten/Größen bzw. davon abgeleitete Daten/Größen als Steuergröße bzw. Regelgröße der Regelung zur Regelung der Lage, Form bzw. Position der optischen Elemente zu verwenden. Daten zur Form bzw. Struktur der Optikfassung, und damit einhergehend zur Lage, Form und/oder Position der optischen Elemente können beispielsweise mittels Dehnungsmesselementen/-streifen u.ä. erfasst werden.

Auch ist es möglich, Daten zur Lage, Form bzw. Position der optischen Elemente dadurch zu erfassen bzw. ermitteln, dass mit der Suchoptik erfasste bzw. erzeugte Bilddaten hinsichtlich möglicher Abbildungsfehler analysiert/ausgewertet werden. Daten zu Abbildungsfehlern können dann beispielsweise als Steuergröße der Regelung verwendet werden. Ein entsprechendes Regelungsverfahren kann vorsehen, dass die Aktoreinheit in Abhängigkeit der auf den Abbildungsfehlern beruhenden Steuergröße so geregelt wird, dass der oder die Abbildungsfehler zumindest reduziert, vorzugsweise beseitigt werden. Insoweit kann eine Suchoptik umfassend eine entsprechende Aktoreinheit mit Regelung als eine adaptive Suchoptik angesehen werden, die in der Lage ist, auf Grundlage der erfassten Bilder zumindest temperaturbedingte Formänderungen und/oder durch Beschleunigungen verursachte Verformungen der Optikfassung auszugleichen. Zur Ermittlung der Abbildungsfehler aus den Bilddaten können geeignete Algorithmen verwendet werden, die z.B. auf einer entsprechenden Regelungseinheit implementiert sein können. Ferner können im Zusammenhang mit einer entsprechenden Regelung Algorithmen, insbesondere elektronisch lesbare Instruktionen, implementiert sein, die bei Ausführung durch die Regelungseinheit eine Formadaption zum Ausgleich von (zumindest) temperaturbedingten Formänderungen usw. bewirken.

Ergänzend sei erwähnt, dass mit einer entsprechenden Regelung neben temperaturbedingten und beschleunigungsbedingten Formänderungen auch, zumindest in gewissem Umfang, z.B. mechanische Toleranzen ausgeglichen werden können.

In Ausgestaltungen kann ein Steuer- oder Regelkreis vorgesehen sein, durch den die Form der Optikfassung bzw. von Teilen davon durch aktive Ansteuerung des aktiv formveränderbaren Materials gesteuert bzw. geregelt veränderbar, insbesondere anpassbar, ist.

Gemäß Ausführungsformen kann die Suchoptik zumindest eine Sensoreinheit umfassen. Die Sensoreinheit kann beispielsweise zumindest teilweise im Volumenmaterial der Optikfassung eingebettet, an der Oberfläche der Optikfassung angebracht oder von der Optikfassung getrennt umgesetzt sein. Die Sensoreinheit kann beispielsweise dazu eingerichtet sein, die Umgebungstemperatur und/oder Beschleunigung zu messen, insbesondere die am Ort der Optikfassung. Die Sensoreinheit kann auch dazu eingerichtet sein, für eine Formänderung der Optikfassung charakteristische Sensorsignale zu erzeugen. Insbesondere kommen die oben bereits beschriebenen Sensoren und Sensortypen in Betracht. Als charakteristische Sensorsignale sollen insbesondere solche verstanden werden, die eine Ermittlung, z.B. Berechnung, von Formänderungen an der Optikfassung ermöglichen. Ein Beispiel für ein solches Sensorsignal ist die Temperatur. Basierend auf der gemessenen Temperatur bzw. basierend auf gemessenen Temperaturänderungen kann beispielsweise auf Grundlage bekannter oder genäherter thermischer Ausdehnungskoeffizienten des oder der Materialien bzw. Werkstoffe der Optikfassung eine gegenüber einer Referenzform bzw. Referenztemperatur zu erwartende Form oder Formänderung zumindest implizit ermittelt oder berechnet werden. Alternativ zur Form oder Formänderung können auch korrespondierende charakteristische Größen ermittelt oder berechnet werden. Wiederum auf der Grundlage der ermittelten bzw. berechneten Form, Formänderung und/oder Größen, kann zur Kompensation der Formänderung die Form des aktiv formveränderbaren Werkstoffs adaptiv angepasst werden. Aufgrund der Kompensation der Formänderung kann erreicht werden, dass die Lage, Position und/oder Form des oder der optischen Elemente im optischen System jeweils vorgegebenen Sollwerten entsprechen, wodurch (insbesondere) durch Temperaturänderungen verursachte Beeinträchtigungen der Abbildungscharakteristik des optischen Systems zumindest weitgehend beseitigt werden können.

Beispielsweise kann die Steuereinheit/Regeleinheit eine aus dem aktiv formveränderbaren Werkstoff gebildete Aktoreinheit so ansteuern/regeln, beispielsweise mit elektrischer Spannung, dass das/die optischen Elemente an jeweils vorgegebenen Positionen im optischen System positioniert und in geeigneter Weise ausgerichtet sind . Insbesondere kann der aktiv formveränderbare Werkstoff, insbesondere die Aktoreinheit, so angesteuert werden, dass dieser/diese einer thermischen Expansion oder Kontraktion und/oder einer durch Beschleunigungen hervorgerufenen Formänderung entgegenwirkt, und die Lage, insbesondere der gegenseitige Abstand des/der optischen Elemente bzw. deren Position im optischen System, den jeweils gewünschten Sollwerten entspricht.

Nach einer Ausführungsform kann die Sensoreinheit als Sensorelemente piezoelektrische Kristalle, piezoelektrische Fasern und/oder ein oder mehrere resistive Dehnungsmessstreifen, induktive Wegsensoren, induktive Abstandssensoren, magnetoelastische Sensoren, kapazitive Differentialsensoren, und/oder faseroptische Temperatursensoren umfassen. Solche Sensorelemente ermöglichen eine vergleichsweise genaue und zuverlässige Ermittlung von temperaturinduzierten Formänderungen des umgebenden Materials. Alternativ oder ergänzend kann die Sensoreinheit ein oder mehrere Temperatursensoren umfassen. Mit jeweiligen Messwerten der Sensorelemente können korrespondierende Formänderungen ermittelt bzw. berechnet werden. Basierend auf den Formänderungen können Steuer- bzw. Regelsignale ermittelt/berechnet werden, die bei Anwendung auf das aktiv formveränderbare Material, insbesondere auf eine oder mehrere Aktoreinheiten, der konkret vorliegenden Formänderung kompensierend entgegenwirken.

Gemäß Ausführungsformen kann des Weiteren eine Steuerung, beispielswiese mit zumindest einer Steuereinheit, vorgesehen sein. Die Steuerung bzw. die zumindest eine Steuereinheit, ist derart eingerichtet, dass diese eine steuerungstechnische Formadaption der Optikfassung durch Adaption des aktiv formveränderbaren Materials ermöglicht. Die steuerungstechnische Formadaption kann dabei basierend auf den Sensorsignalen der zumindest einen Sensoreinheit erfolgen. An Stelle der Sensorsignale oder ergänzend dazu kann/können auch ein oder mehrere von den Sensorsignalen abgeleitete Werte oder (physikalische) Größen verwendet werden. Bei Implementierung einer Steuerung können die Sensorsignale bzw. der oder die abgeleiteten Werte oder Größen als Führungsgröße der Steuerung verwendet werden. Ferner können zusätzlich zur Führungsgröße ein oder mehrere vorgegebene Steuerparameter vorgesehen sein.

In Ausgestaltungen kann die Steuerung derart eingerichtet sein, dass diese aus den Sensorsignalen eine für die Temperatur der Optikfassung, eine für eine Längenänderung der Optikfassung und/oder eine für eine Volumenänderung der Optikfassung charakteristische Größe ermittelt, und diese Größe als Führungsgröße verwendet. Neben oder alternativ zur Temperatur als solcher kommen auch andere Größen in Betracht, insbesondere solche Größen, die sich in bekannter Weise in Abhängigkeit der Temperatur ändern. Beispielsweise können Signale von Piezokristallen sowie die Signale der weiter oben bereits genannten Sensoren und Sensortypen herangezogen werden.

Gemäß Ausführungsformen kann die Suchoptik eine Regelung, beispielsweise mit zumindest einer Regeleinheit, umfassen. Die Regelung, insbesondere die zumindest eine Regeleinheit, ist zur regelungstechnischen Formadaption der Optikfassung eingerichtet. Die regelungstechnische Formadaption kann beispielsweise durch Adaption des aktiv formveränderbaren Materials basierend auf den Sensorsignalen erfolgen, insbesondere basierend auf Sensorsignalen gemäß der obigen Beschreibung zur Steuerung bei Verwendung der Sensorsignale als Regelgröße bzw. Steuergröße der Regelung,. Alternativ oder zusätzlich zu den Sensorsignalen kann/können auch eine oder mehrere von den Sensorsignalen abgeleitete Werte oder (physikalische) Größen verwendet werden. Die Sensorsignale und/oder die abgeleiteten Werte oder Größen können als Regelgröße der Regelung verwendet werden. Zusätzlich zur Regelgröße können der Regelung ein oder mehrere Regelungsparameter vorgegeben sein.

Als Sensorsignale bzw. Regelgrößen oder Steuergrößen für die Regelung können insbesondere auch Bildsignale oder von Bildern oder Bildsignalen abgeleitete Größen, verwendet werden, die mittels einer Bilderfassungseinheit des Suchkopfs bzw. der Suchoptik aufgenommen werden. Beispielsweise können in den Bildsignalen bzw. aufgenommenen Bildern enthaltene Abbildungsfehler ermittelt werden, und die ermittelten Abbildungsfehler bzw. eine oder mehrere die Abbildungsfehler beschreibende Größen oder davon abgeleitete Werte können als Steuer- oder Regelgröße verwendet werden. Dabei können bei einer entsprechenden Steuer- oder Regeleinheit geeignete Algorithmen zur Bildverarbeitung implementiert sein, die eine Ermittlung von Abbildungsfehlern, insbesondere temperaturinduzierten Abbildungsfehlern, ermöglichen.

Bei dem abgeleiteten Wert bei Implementierung einer Regelung kann es sich beispielsweise um Werte oder (physikalische) Größen handeln, die für die Form der Optikfassung oder für die Form von Segmenten der Optikfassung und/oder Formänderungen charakteristisch sind. Entsprechend zu den Ausführungen zur Steuerung können auch bei der Regelung die Signale der bereits genannten Sensoreinheiten bzw. Sensorelemente oder davon abgeleitete Größen für die Regelung herangezogen werden.

Eine Steuerung bzw. Regelung der Form der Optikfassung ermöglicht insbesondere eine vergleichsweise genaue und unmittelbare, insbesondere eine im Wesentlichen in Echtzeit erfolgende, Einstellung der Lage, Position und/oder Form der optischen Elemente im optischen System. Entsprechend kann beispielsweise ein durch Positions-und/oder Formänderungen der optischen Elemente verursachter Abbildungsfehler im optischen System korrigiert bzw. kompensiert werden. Ein mit einer entsprechenden Suchoptik ausgestatteter Suchkopf ermöglicht insoweit eine vergleichsweise genaue und von äußeren Einflüssen, wie z.B. Temperaturänderungen, weitgehend unabhängige Erfassung/Verfolgung von Objekten. Mit einer entsprechenden Regelung bzw. Steuerung und der damit möglichen zeitnahen, insbesondere in Echtzeit erfolgenden, Anpassungen der Optikfassung, eignet sich die Suchoptik insbesondere zum Einsatz bei Flugkörpern, insbesondere Lenkflugkörpern, im Rahmen der Zielführung des Flugkörpers auf ein Objekt hin.

Gemäß Ausführungsformen kann das optische System der Suchoptik eine mehrstufige, insbesondere zweistufige, Optik umfassen. Bei der mehrstufigen Optik kann die zumindest eine Optikfassung zumindest ein optisches Element zumindest einer Stufe der mehrstufigen Optik haltern. Insbesondere kann das zumindest eine optische Element in oder an einem Abschnitt der Optikfassung gehaltert sein, in dem der aktiv formveränderbare Werkstoff vorhanden ist. Entsprechend können Lage, insbesondere Position und Ausrichtung, und/oder Form des optischen Elements durch adaptive Formänderung des formveränderbaren Werkstoffs angepasst werden.

Insbesondere ist es in Ausgestaltungen möglich, dass das optische System eine zweistufige Optik umfasst, bei der die erste Stufe eine reflektive Optik, insbesondere eine Spiegeloptik mit mehreren Spiegeln, insbesondere ein Spiegelteleskop, ausbildet, und bei der die zweite Stufe als eine refraktive Optik, umfassend insbesondere ein oder mehrere Linsen und/oder Prismen, ausgebildet ist. Insbesondere können die reflektiven optischen Elemente der ersten Stufe, deren Lage, insbesondere Position und Ausrichtung, und/oder Form insbesondere bei Suchoptiken für die Abbildungsgenauigkeit entscheidend ist, durch das aktiv formveränderbare Material der Optikfassung gehaltert sein, so dass durch externe Einflüsse wie Temperaturänderungen verursachte Lage- und/oder Formänderungen kompensiert werden können.

Gemäß Ausführungsformen kann das das optische System ein Spiegelteleskop mit einem Primärspiegel und einem Sekundärspiegel umfassen. Die dem Spiegelteleskop zugeordnete Optikfassung kann einen Abstandhalter zur Beabstandung von Primärund Sekundärspiegel bilden. Die Optikfassung kann dabei derart ausgebildet sein, dass zur Kompensation von temperaturbedingten und/oder beschleunigungsbedingten, insbesondere durch die Bewegungsdynamik des optischen Systems hervorgerufene, Abstandsänderungen und/oder zur Kompensation von Fertigungs- und/oder Justagetoleranzen, die relative Lage, insbesondere der Abstand, von Primär- und Sekundärspiegel und/oder deren Form durch das aktiv formveränderbare Material adaptiv veränderbar ist. Dabei kann das aktiv formveränderbare Material insbesondere an geeigneten Stellen in die Optikfassung integriert sein, oder die Optikfassung bzw. der Abstandshalter kann im Wesentlichen als Ganzes aus dem aktiv formveränderbaren Material hergestellt sein bzw. bestehen.

In Ausgestaltungen kann ein Suchkopf mit einer zweistufig reflektiv-refraktiven Optik bereitgestellt werden, bei der die gegenüber Temperaturschwankungen und dynamischen Beanspruchungen vergleichsweise anfällige reflektive Optik des Spiegelteleskops in Lage und Form den jeweils vorherrschenden Bedingungen angepasst werden kann. Es kann somit insbesondere ein Suchkopf bereitgestellt werden, dessen optisches System zumindest in einem gegebenen Temperaturintervall, beispielsweise für Temperaturen im Bereich zwischen - 55°C bis +85 °C; gegenüber Temperaturschwankungen vergleichsweise robust ist.

In Ausgestaltungen ist ein Suchkopf vorgesehen, der insbesondere eine Schnittstelle zur Montage an einem Flugkörper, insbesondere Lenkflugkörper, aufweist. Der Suchkopf umfasst zumindest eine Suchoptik gemäß zumindest einer der hierin erfindungsgemäß vorgeschlagenen Ausführungsformen und Ausgestaltungen.

In Ausgestaltungen ist ein Flugkörper, insbesondere Lenkflugkörper, vorgesehen der zumindest einen Suchkopf und/oder zumindest eine Suchoptik gemäß zumindest einer der hierin erfindungsgemäß vorgeschlagenen Ausführungsformen und Ausgestaltungen umfasst.

Beispielhafte Ausgestaltungen der Erfindung werden nachfolgend anhand der anhängenden Figuren beschrieben. Es zeigen:
- FIG. 1: eine Querschnittsdarstellung eines Suchkopfs;
- FIG. 2: eine perspektivische Darstellung einer ersten optischen Stufe des Suchkopfs mit Optikfassung;
- FIG. 3: eine perspektivische Darstellung der Optikfassung nach FIG. 2;
- FIG. 4: eine schematische Darstellung eines Steuerkreises zur adaptiven Veränderung der Optikfassung;
- FIG. 5: eine schematische Darstellung eines Regelkreises zur adaptiven Veränderung der Optikfassung;
- FIG. 6: einen (Lenk)Flugkörper mit Suchkopf.

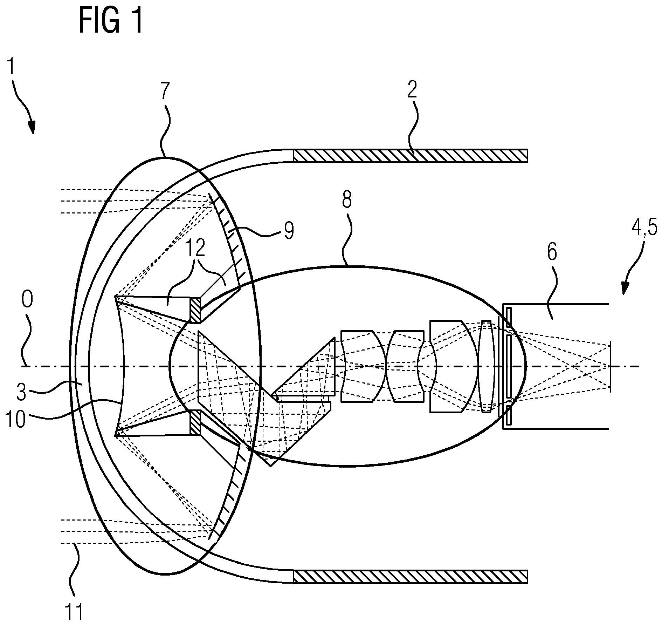

FIG. 1 zeigt eine Querschnittsdarstellung eines Suchkopfs 1 mit einem Gehäuse 2. Das Gehäuse 2 weist stirnseitig ein vom Gehäuseinneren aus gesehen konvex gewölbtes Sichtfenster 3 für eine im Gehäuseinneren befindliche Suchoptik 4 mit einem optischen System 5 auf.

Der Suchkopf 1 respektive die Suchoptik 4 umfasst beispielhaft einen infrarotempfindlichen Detektor 6, d.h. einen für infrarote Strahlung empfindlichen Detektor 6. Dem Detektor 6 ist im optischen System des Suchkopfs vorgeschaltet eine zweistufige Optik mit einer reflektiven ersten Stufe 7 und einer refraktiven zweiten Stufe 8. Lediglich zu Zwecken der visuellen Darstellung sind die Stufen der Optik jeweils durch eine einrahmende Ellipse hervorgehoben.

Die reflektive erste Stufe 7 der zweistufigen Optik umfasst einen Primärspiegel 9 und einen Sekundärspiegel 10, deren Anordnung der eines Spiegelteleskops entspricht. Von außen auf den Suchkopf 1 über das Sichtfenster 3 einfallende Infrarotstrahlung 11 trifft auf den Primärspiegel 9, genauer auf eine konkav gewölbte Spiegelfläche des Primärspiegels 9, durch welchen bzw. welche die einfallende Infrarotstrahlung 11 auf den Sekundärspiegel 10 fokussiert wird. Der Sekundärspiegel 10 umfasst eine konvex gekrümmte Spiegelfläche, die im Strahlengang derart angeordnet ist, dass die vom Primärspiegel 9 einfallende fokussierte Infrarotstrahlung weiter auf die refraktive zweite Stufe 8 der zweistufigen Optik gelenkt bzw. fokussiert wird.

Die refraktive zweite Stufe 8 umfasst mehrere optische Elemente, unter anderem prismatische optische Elemente und Linsen, die derart längs der optischen Achse O angeordnet und positioniert sind, dass die vom Sekundärspiegel in die zweite Stufe 8 eingespeiste Infrarotstrahlung auf den Detektor 6 abgebildet wird. Basierend auf dem Abbild der Infrarotstrahlung auf dem Detektor 6 kann der Suchkopf 1 beispielsweise ein potentiell relevantes Ziel bzw. Objekt identifizieren und/oder nachverfolgen, und insoweit Daten für eine zielgerichtete Steuerung eines Flugkörpers erzeugen.

Die Genauigkeit des Suchkopfs 1 zur Identifikation und Nachverfolgung eines Ziels bzw. Objekts hängt unter anderem von der Abbildungscharakteristik und-genauigkeit des optischen Systems 5 ab. Die Abbildungscharakteristik/-genauigkeit des optischen Systems 5 wiederum kann durch äußere Einflussfaktoren, wie beispielsweise die Temperatur oder Temperaturänderungen, maßgeblich negativ beeinflusst werden.

Beispielsweise kann durch thermische Expansion oder Kontraktion, oder andere externe Einflüsse wie Beschleunigungskräfte, die relative Lage der optischen Elemente zueinander bzw. deren Position relativ zur optischen Achse O und/oder deren Form verändert werden. Solche Veränderungen können die Abbildungscharakteristik des optischen Systems 5 maßgeblich beeinträchtigen, einhergehend mit einer Herabsetzung der Genauigkeit der Objekt- bzw. Zielerkennung oder - verfolgung.

Um solchen Veränderungen in Lage und/oder Position der optischen Elemente und/ oder in der Form entgegenzuwirken, umfasst das optische System 5 des Suchkopfs 1 der FIG. 1 eine Optikfassung 12 mit der im vorliegenden Ausführungsbeispiel insbesondere der Primärspiegel 9 und der Sekundärspiegel 10 gehaltert sind, wobei die Optikfassung 12 einen aktiv formveränderbaren Werkstoff umfasst, durch welchen zumindest die Lage, insbesondere Position und/oder Ausrichtung, des Primär- und Sekundärspiegels 9 und 10 im optischen System 5 zumindest in Richtung parallel der optischen Achse adaptiv veränderbar ist.

In Ausgestaltungen kann der aktiv formveränderbare Werkstoff auch derart vorgesehen sein, dass die optischen Elemente der refraktiven zweiten Stufe 8 in ihrer Lage, insbesondere Position, in, quer und/oder rotatorisch zur optischen Achse, und/oder in ihrer Form adaptiv veränderbar sind. Solche Ausgestaltungen können analog zu dem nachfolgend beschriebenen Ausführungsbeispiel umgesetzt sein, wobei eine Anpassung der Lage der optischen Elemente für jede der Stufen der Optik separat, oder für die Optik als Ganzes entsprechend anwendbar sind.

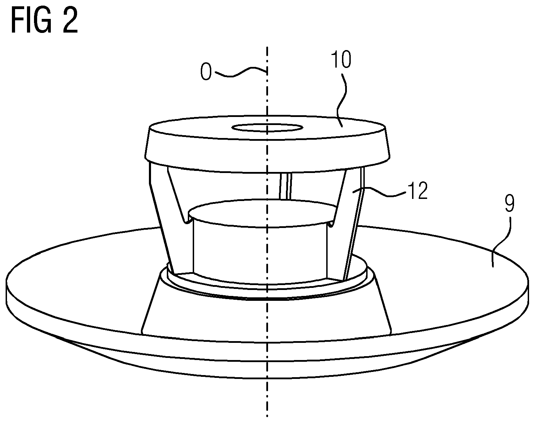

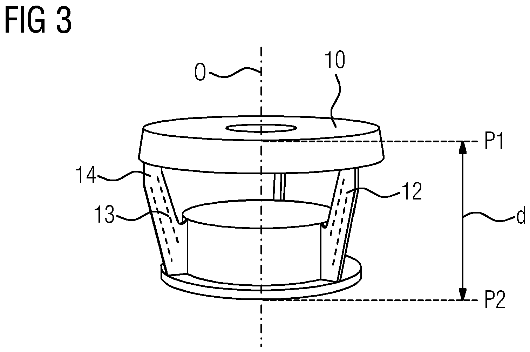

Die Optikfassung 12 der reflektiven ersten Stufe 7 des optischen Systems 5 ist in weiteren Einzelheiten in FIG. 2 und 3 dargestellt.

FIG. 2 zeigt eine perspektivische Darstellung der Optikfassung 12, wobei die Optikfassung 12 im vorliegenden Beispiel eine Fassung bzw. Halterung ausbildet, die einerseits die beiden Spiegel 9, 10 haltert, und andererseits die Spiegel insbesondere in Richtung der optischen Achse O in einem vorgegebenen Abstand zueinander positioniert. Die Optikfassung 12 bildet insoweit und insbesondere einen Abstandshalter für die optischen Elemente 9, 10 des Spiegelteleskops der reflektiven ersten Stufe 7 des optischen Systems 5. Solche Abstandshalter werden im Kontext von Spiegelteleskopen auch Spinnen genannt.

Insbesondere zum Ausgleich von Lageänderungen, wie z.B. Abstandsänderungen, der Spiegel 9, 10 der reflektiven ersten Stufe 7, beispielsweise verursacht durch Temperaturänderungen, insbesondere durch Änderung der Umgebungstemperaturen oder durch andere äußere Einwirkungen beim Einsatz des Suchkopfs, weist die Optikfassung 12 bzw. die Spinne 12 den bereits erwähnten aktiv formveränderbaren Werkstoff auf.

Der formveränderbare Werkstoff umfasst in dem Ausführungsbeispiel der FIG. 3 piezoelektrische Kristalle 13, die mit einer gegebenen Ausrichtung bzw. Vorzugsrichtung ins Volumenmaterial der Spinne 12 eingebettet sind. Obgleich das Ausführungsbeispiel anhand von piezoelektrischen Kristallen 13 beschrieben wird, gelten die nachfolgenden Ausführungen analog auch für andere aktiv formveränderbare Werkstoffe, z.B. allgemein invers piezoaktive Materialien, elektro- und/oder magnetostriktive Materialien usw., wie dies weiter oben in allgemeiner Form bereits beschrieben wurde.

Konkret und wie insbesondere aus FIG. 3 ersichtlich, sind die piezoelektrischen Kristalle ins Volumenmaterial der Spinnenarme 14 eingebettet, die zwischen jeweiligen Haltesegmenten für den Primärspiegel 9 und Sekundärspiegel 10 vorhanden sind. Bei dem Volumenmaterial kann es sich z.B. im ein mit Fasern verstärktes Kunststoffmaterial handeln. Piezoelektrische Kristalle können in weiteren Ausgestaltungen auch in anderen Segmenten bzw. Bereichen der Spinne 12 bzw. der Optikfassung vorhanden sein, damit in entsprechenden Segmenten Lage bzw. Position und/oder Form der optischen Elemente veränderbar ist.

Die piezoelektrischen Kristalle 13 sind entsprechend der gegebenen Vorzugsrichtung derart eingebettet, dass durch Beaufschlagung der piezoelektrischen Kristalle 13 mit elektrischer Spannung die Ausdehnung der Arme 14 der Spinne 12 in Richtung der optischen Achse aktiv veränderbar ist. Damit kann die Ausdehnung der Arme 14 in Richtung der optischen Achse O adaptiv verändert werden. Mit der adaptiven Veränderung der Ausdehnung des Materials in Richtung der optischen Achse O kann insbesondere die Länge der Arme 14 in Richtung der optischen Achse verändert werden. Mit einer Anpassung der Länge der Arme 14 können insbesondere die Positionen P1 und P2 der Spiegel 9, 10 und deren relative Lage, d.h. der gegenseitige Abstand d, eingestellt werden.

Mit der Veränderung des Abstands d kann z.B. einer durch thermische Expansion bzw. Kontraktion bei Änderung der Umgebungstemperatur verursachten Positionsänderung der Spiegel 9, 10 entgegengewirkt werden. Insbesondere kann der Abstand d durch entsprechende Ansteuerung oder Regelung der Piezokristalle 13 so eingestellt werden, dass die Spiegel 9, 10 entsprechend einem jeweils vorgegebenem Sollwert eingestellt sind.

Neben der in den Figuren gezeigten, im Wesentlichen parallel zur optischen Achse O ausgerichteten piezoelektrischen Kristallen 13, können diese in vorgegebenen Bereichen oder Segmenten der Optikfassung 12 auch quer, insbesondere senkrecht, zur optischen Achse O eingebettet sein. Ferner können die piezoelektrischen Kristalle 13 auch außerhalb der Arme 14 eingebettet sein. Bei geeigneter Einbettung der piezoelektrischen Kristalle kann erreicht werden, dass die Optikfassung derart in der Form adaptierbar ist, dass die Lage, insbesondere Position und/oder Ausrichtung, und/oder Form der optischen Elemente parallel,quer und/oder rotatorisch zur optischen Achse O angepasst d.h. adaptiert, werden kann.

Bei geeigneter Einbettung der piezoelektrischen Kristalle und geeigneten Materialien der optischen Elemente kann auch erreicht werden, dass die Form der optischen Elemente veränderbar ist. Beispielsweise kann die Form der die optischen Elemente halternden Teile der Optikfassung 12 adaptiert werden, indem durch längs und/oder quer zur optischen Achse gelegene piezoelektrische Kristalle Umformkräfte erzeugt werden. Basierend auf der Formänderung der Optikfassung kann wiederum die Form der optischen Elemente, z.B. der Spiegel 9, 10, verändert bzw. angepasst werden.

Daraus ergibt sich, dass durch entsprechende Beaufschlagung der piezoelektrischen Kristalle 13 mit elektrischer Spannung einer durch thermische Expansion oder Kontraktion des Materials der Optikfassung verursachten Positions- und/oder Formänderung entgegengewirkt werden kann. Insbesondere können durch Temperaturveränderungen verursachte Änderungen der Abstände zwischen den optischen Elementen kompensiert werden. Analog können auch Änderungen des Brechungsindex des umgebenden Mediums oder andere äußere Einflüsse, welche die optischen Abbildungseigenschaften des optischen Systems 5 beeinträchtigen, beispielsweise (Einbau-)Toleranzen, bewegungsinduzierte Formänderungen (z.B. verursacht durch Flugkörperbewegungen und damit einhergehende Beschleunigungen), Feuchtigkeit usw., kompensiert werden.

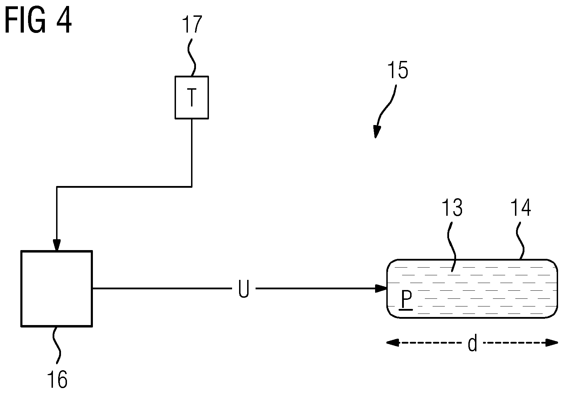

FIG. 4 zeigt eine schematische Darstellung eines Steuerkreises 15 zur adaptiven Veränderung der Optikfassung 12. Der Steuerkreis 15 kann beispielsweise im Suchkopf 1 aufgenommen sein, und insbesondere in einer Suchkopfsteuerung implementiert sein.

Der Steuerkreis 15 umfasst eine Steuereinheit 16, die signaltechnisch einerseits mit einem Temperatursensor 17 und anderseits mit der Optikfassung 12, beispielsweise mit den Armen 14 der Optikfassung 12 verbunden bzw. gekoppelt ist. Insbesondere ist die Steuereinheit 16 mit dem Bereich der Optikfassung 12 gekoppelt, in dem die piezoelektrischen Kristalle zur Ausbildung der adaptiv formveränderbaren Eigenschaften eingebettet sind. Dieser Bereich wird nachfolgend kurz auch Piezobereich P genannt. Dabei ist die signaltechnische, elektrische Verbindung zwischen Steuereinheit 16 und Piezobereich P so eingerichtet, dass die Steuereinheit 16 den Piezobereich P mit Spannung U beaufschlagen kann. Je nach Höhe der Spannung U ändert sich die Länge der piezoelektrischen Kristalle 13 im Piezobereich P, wodurch eine Formänderung, insbesondere Längenänderung, insbesondere im Bereich der Arme 14 der Optikfassung 12 induziert wird.

Die Steuereinheit 16 ist derart eingerichtet, dass diese abhängig von den Sensorsignalen des Temperatursensors 17 für die jeweils gemessene Umgebungstemperatur T, im Weiteren kurz Temperatur T, eine Spannung U ermittelt, mit der die Optikfassung 12, insbesondere der Piezobereich P, beaufschlagt werden muss, damit einer thermisch bedingten Expansion bzw. Kontraktion der Optikfassung 12 durch entsprechende Längenänderung der piezoelektrischen Kristalle 13 entgegengewirkt werden kann. Hierzu kann die Steuereinheit 16 beispielsweise entsprechend programmiert sein, und insbesondere basierend auf thermischen Ausdehnungskoeffizienten, eine für die jeweils gemessene Temperatur T geeignete Spannung U ermitteln mit der die thermische Kontraktion/Expansion bei der gemessenen Temperatur gegenüber einer Referenztemperatur durch die Längenänderung der piezoelektrischen Kristalle kompensiert werden kann. Im vorliegenden Ausführungsbeispiel dient die mit dem Temperatursensor 17 gemessene Temperatur T als Führungsgröße für den Steuerkreis. Mithin kann steuerungstechnisch der Abstand d verändert werden, was bedeutet, dass insbesondere der gegenseitige Abstand der optischen Elemente adaptiv veränderbar, zumindest in gewissem Rahmen insbesondere einstellbar ist.

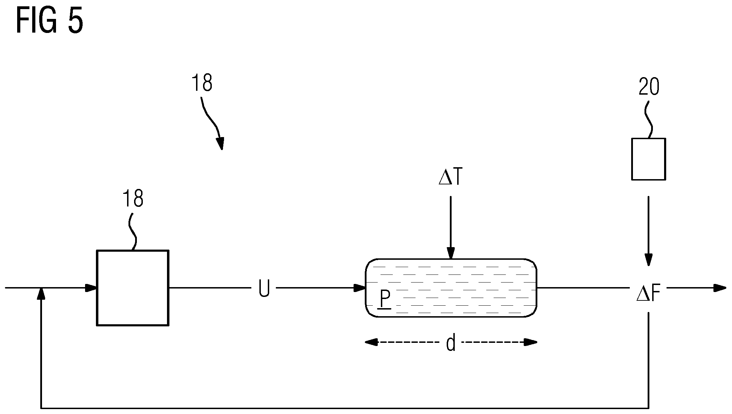

In Ausgestaltungen, beispielsweise gemäß FIG. 5, kann vorgesehen sein, dass der Suchkopf 1 einen Regelkreis 18 umfasst, bzw. dass dem Suchkopf 1 oder der Suchoptik 4 ein Regelkreis 18 zugeordnet ist.

Der Regelkreis 18 kann insbesondere ausgebildet sein zur regelungstechnischen Formadaption der Optikfassung 12. Insbesondere kann ein solcher Regelkreis 18, wie in FIG. 5 schematisch dargestellt, eine Regelstrecke mit einer Regeleinheit 19 und einer Formsensoreinheit 20 zur Erfassung von Formänderungen ΔF der Optikfassung 12, insbesondere des Piezobereichs P umfassen. Beispielsweise kann eine solche Sensoreinheit Dehnungsmessstreifen oder Piezoelemente umfassen, die beispielsweise ins Material der Optikfassung 12 eingebettet oder damit verbunden sind, und so eingerichtet sind, dass Längenänderungen in oder quer zur optischen Achse O, allgemein Formänderungen der Optikfassung 12 und/oder der optischen Elemente, erfassbar sind.

Alternativ oder zusätzlich kann der Regelkreis 18 auch derart eingerichtet, insbesondere programmiert, sein, dass Formänderungen der Optikfassung 12 auf Grundlage von Abbildungsfehlern der Suchoptik 4 ermittelt bzw. festgestellt werden können.

Bei der Regelstrecke kann/können beispielsweise die Formänderung ΔF und/oder eine oder mehrere den oder die Abbildungsfehler beschreibenden Größen als Regelgröße verwendet werden, und entsprechend der rückgekoppelten Regelgröße kann die Regeleinheit eine jeweils geeignete Spannung U ermitteln, mit der durch Temperaturänderungen ΔT bzw. anderen äußeren Einflüssen verursachte Formänderungen der Optikfassung 12 kompensiert werden können.

Wie bereits angedeutet, kann in Ausführungsbeispielen bei der Regelstrecke als Regelgröße ein Abbildungsfehler oder eine den Abbildungsfehler beschreibende Größe verwendet werden, der oder die, z.B. durch entsprechend implementierte Algorithmen, aus Bilddaten ermittelt werden kann, die mit der Suchoptik erfasst wurden/werden. Entsprechend ist es mit der Regelstrecke möglich, Abbildungsfehler, die durch Form- oder Lage-/Positionsänderung, z.B. durch Temperaturänderungen oder andere äußere Einflüsse verursacht werden, auszugleichen bzw. zu beseitigen. Eine Regelstrecke ermöglicht insbesondere eine im Wesentlichen kontinuierliche, zumindest jedoch iterativ adaptive, Korrektur von Lageänderungen und/oder Formänderungen der Optikfassung bzw. der optischen Elemente, und damit eine iterativ adaptive Korrektur von Abbildungsfehlern in Bilddaten der Suchoptik.

Analog wie bei der Steuerstrecke ermöglicht die Regelstrecke, zumindest über einen gewissen Temperaturbereich hinweg, eine Einstellung eines vorgegebenen Sollabstands zwischen den von der Optikfassung 12 gehalterten optischen Elementen bzw. die Einstellung einer jeweiligen Soll-Form. Insbesondere können mit einem Steuerkreis 15 bzw. Regelkreis 18 temperaturinduzierte oder anderweitig durch äußere Einflüsse bewirkte Beeinträchtigungen der Abbildungsgenauigkeit kompensiert werden.

Besonders vorteilhaft umfasst die Optikfassung ein faserverstärktes Kunststoffmaterial, beispielsweise ein faserverstärktes Epoxidharz. Ein solches Material ermöglicht eine vergleichsweise einfache Einbettung von invers piezoaktiven Materialien, insbesondere piezoelektrischen Kristallen, und/oder elektrostriktiven Materialien. Auch in Frage kommen Materialien mit magnetostriktiven Eigenschaften, so dass Lage-/Positions- und/ oder Formänderungen auf Grundlage der magnetostriktiven Eigenschaften ausgeglichen werden können.

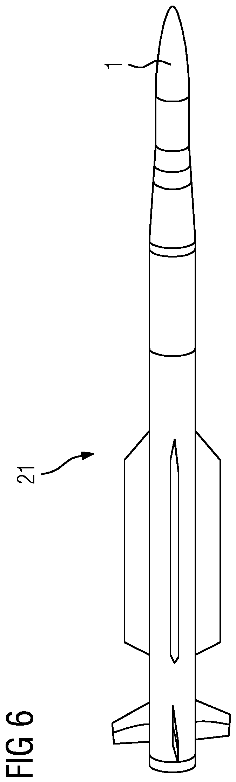

FIG. 6 schließlich zeigt einen an sich bekannten Flugkörper 21, insbesondere Lenkflugkörper 21, mit einem Suchkopf 1 nach einer Ausgestaltung der Erfindung. Der Suchkopf 1 ist an einer antriebsseitig abgewandten Spitze des Lenkflugkörpers 21 positioniert, beispielsweise basierend auf einer Montageschnittstelle zur Montage des Suchkopfs 1 am Rumpf des Lenkflugkörpers 21.

### Bezugszeichen

- 1: Suchkopf
- 2: Gehäuse
- 3: Sichtfenster
- 4: Suchoptik
- 5: optisches System
- 6: Detektor
- 7: reflektive erste Stufe
- 8: refraktive zweite Stufe
- 9: Primärspiegel
- 10: Sekundärspiegel
- 11: Infrarotstrahlung
- 12: Optikfassung
- 13: piezoelektrische Kristalle
- 14: Arm
- 15: Steuerkreis
- 16: Steuereinheit
- 17: Temperatursensor
- 18: Regelkreis
- 19: Regeleinheit
- 20: Formsensoreinheit
- 21: Flugkörper

- d: Abstand
- ΔF: Formänderung
- O: optische Achse
- Pi: Position
- P: Piezobereich
- ΔT: Temperaturänderung
- T: Temperatur

## Patentansprüche

1. Suchoptik (4) für einen Flugkörpersuchkopf (1), insbesondere Lenkflugkörpersuchkopf, umfassend ein optisches System (5) mit zumindest einem bezüglich einer optischen Achse (O) positioniert ausgerichteten, in zumindest einer Optikfassung (12) gehalterten optischen Element (9, 10), wobei die zumindest eine Optikfassung (12) einen aktiv formveränderbaren Werkstoff (13, P) umfasst, durch welchen die Lage (P₁) des zumindest einen optischen Elements (9, 10) im optischen System (5) relativ zur optischen Achse (O) veränderbar ist und/oder durch welchen die Form des zumindest einen optischen Elements (9, 10) adaptiv veränderbar ist, **dadurch gekennzeichnet, dass**
der aktiv formveränderbare Werkstoff (13, P) der zumindest einen Optikfassung (12) eine Aktoreinheit bildet, die zur aktiven Formveränderung ein mit Fasern verstärktes Kunststoffmaterial umfasst, in welches invers piezoaktive, elektrostriktive und/oder magnetostriktive Materialien eingebettet oder an dessen Oberfläche oder in einer oberflächennahen Schicht invers piezoaktive, elektrostriktive und/oder magnetostriktive Materialien vorgesehen sind.

2. Suchoptik (4) nach Anspruch 1, wobei das Kunststoffmaterial eine Matrix bildet, in welche die Fasern eingebettet sind.

3. Suchoptik (4), nach Anspruch 1 oder 2, wobei die Fasern Kohlenstoffasern, Glasfasern und/oder Basaltfasern umfassen, oder wobei es sich bei den Fasern um Kohlenstoffasern, Glasfasern oder Basaltfasern handelt.

4. Suchoptik (4) nach einem der vorhergehenden Ansprüche, wobei das Kunststoffmaterial zumindest ein aus der folgenden Gruppe ausgewähltes Material umfasst:
Epoxidharze, Vinylesterharze, Polyuretane, Polyetherketone, Polyetheretherketone, oder
das Kunststoffmaterial aus zumindest einem aus der Gruppe ausgewählten Material besteht.

5. Suchoptik (4) nach einem der Ansprüche 1 bis 4, wobei der aktiv formveränderbare Werkstoff (13, P) eine Aktoreinheit (14) bildet, die als Aktorelemente invers piezoaktive Materialien (13), insbesondere piezoelektrische Kristalle (13) und/oder Fasern, umfasst, die insbesondere gemäß zumindest einer Vorzugsrichtung ausgerichtet im Volumenmaterial der zumindest einen Optikfassung (12) eingebettet sind.

6. Suchoptik (4) nach einem der Ansprüche 1 bis 5, umfassend zumindest eine Sensoreinheit (17, 21), die insbesondere zumindest teilweise im Volumenmaterial der Z zumindest einen Optikfassung (12) eingebettet ist und/oder an einer Oberfläche der zumindest einen Optikfassung (12) angebracht ist, wobei die zumindest eine Sensoreinheit (17, 21) eingerichtet ist zur Messung der Umgebungstemperatur und/oder zur Erzeugung von für Formveränderungen (ΔF) der Z zumindest einen Optikfassung (12) charakteristischen Sensorsignalen.

7. Suchoptik (4) nach Anspruch 6, wobei die zumindest eine Sensoreinheit (21) als Sensorelemente piezoelektrische Kristalle, piezoelektrische Fasern, und/oder ein oder mehrere resistive Dehnungsmessstreifen, induktive Wegsensoren, induktive Abstandssensoren, magnetoelastische Sensoren, kapazitive Differentialsensoren, und/ oder faseroptische Temperatursensoren umfasst.

8. Suchoptik (4) nach Anspruch 6 oder 7, umfassend des Weiteren eine Steuerung (15), die eingerichtet ist zur steuerungstechnischen Formadaption der zumindest einen Optikfassung (12) durch Adaption des aktiv formveränderbaren Werkstoffs (13, P) basierend auf den Sensorsignalen oder einem oder mehreren davon abgeleiteten Werten oder Größen als Führungsgröße (T, ΔF) und optional einem oder mehreren vorgegebenen Steuerparametern.

9. Suchoptik (4) nach Anspruch 8, wobei die Steuerung (15) eingerichtet ist, aus den Sensorsignalen eine für eine Temperatur (T), eine für eine Längenänderung und/ oder eine für eine Volumenänderung der zumindest einen Optikfassung (12) charakteristische Größe zu ermitteln, und diese Größe als Führungsgröße zu verwenden.

10. Suchoptik (4) nach Anspruch 6 oder 7, umfassend des Weiteren eine Regelung (18), die eingerichtet ist zur regelungstechnischen Formadaption der zumindest einen Optikfassung (12) durch Adaption des aktiv formveränderbaren Werkstoffs (13, P) basierend auf den Sensorsignalen (ΔF) oder einem oder mehreren davon abgeleiteten Werten oder Größen als Regelgröße und optional einem oder mehreren vorgegebenen Regelungsparametern.

11. Suchoptik (4) nach Anspruch 10, wobei es sich bei dem abgeleiteten Wert um für die Form der zumindest einen Optikfassung (12), für die Form von Segmenten der zumindest einen Optikfassung (12), oder entsprechende Formänderungen (ΔF) charakteristische Werte oder Größen handelt.

12. Suchoptik (4) nach einem der Ansprüche 1 bis 11, wobei das optische System (5) eine mehrstufige, insbesondere zweistufige, Optik (7, 8) umfasst, und wobei das in zumindest einer Optikfassung (12) gehalterten optischen Element (9, 10) zu einer Stufe (7, 8) gehört und/ oder die zumindest eine Optikfassung (12) zumindest ein zusätzliches optisches Element (9, 10) zumindest einer Stufe (7, 8) haltert.

13. Suchoptik (4) nach Anspruch 12, wobei das optische System (5) eine zweistufige Optik (7, 8) umfasst, bei der die erste Stufe (7) eine reflektive Optik, insbesondere eine Spiegeloptik mit mehreren Spiegeln, insbesondere ein Spiegelteleskop, ausbildet, und bei der die zweite Stufe (8) als eine refraktive Optik, umfassend insbesondere ein oder mehrere Linsen und/oder Prismen, ausgebildet ist, wobei bevorzugt der aktiv formveränderbare Werkstoff (13, P) der zumindest einen Optikfassung (12) zumindest ein optisches Element (9, 10) der ersten Stufe (7) haltert.

14. Suchoptik (4) nach einem der vorangehenden Ansprüche, wobei das optische System (5) ein Spiegelteleskop mit einem Primärspiegel (9) und einem Sekundärspiegel (10) umfasst, und die zugeordnete zumindest eine Optikfassung (12) des Spiegelteleskops einen Abstandhalter (12, 14) zur Beabstandung von Primär- (9) und Sekundärspiegel (10) bildet, und wobei die zumindest eine Optikfassung (12) insbesondere derart ausgebildet ist, dass, zur Kompensation von temperaturbedingten und/oder beschleunigungsbedingten Abstandsänderungen, und/oder zur Kompensation von Fertigungs- und Justagetoleranzen, die relative Lage (P₁), insbesondere der Abstand (d), von Primär- (9) und Sekundärspiegel (10) durch den aktiv formveränderbaren Werkstoff (13, P) adaptiv veränderbar ist.

15. Suchkopf (1) mit einer Schnittstelle zur Montage an einem Flugkörper, insbesondere Lenkflugkörper, umfassend zumindest eine Suchoptik (4) nach einem der Ansprüche 1 bis 14.

16. Flugkörper (21), insbesondere Lenkflugkörper (21), mit zumindest einem Suchkopf (1) nach Anspruch 15 oder zumindest einer Suchoptik (4) nach einem der Ansprüche 1 bis 14.

## Claims

1. Seeking optical unit (4) for a missile seeker head (1), in particular a guided missile seeker head, comprising an optical system (5) with at least one optical element (9, 10) which is aligned with respect to an optical axis (O) and held in at least one optics mount (12), wherein the at least one optics mount (12) comprises an actively shape-changeable material (13, P), with which the pose (P₁) of the at least one optical element (9, 10) in the optical system (5) in relation to the optical axis (O) is changeable and/or with which the shape of the at least one optical element (9, 10) is adaptively changeable, **characterized in that** the actively shape-changeable material (13, P) of the at least one optics mount (12) forms an actuator unit which comprises, for the active shape change, a fibre-reinforced plastics material in which inversely piezo-active, electrostrictive and/or magnetostrictive materials are embedded or on whose surface or in a surface-near layer inversely piezo-active, electrostrictive and/or magnetostrictive materials are provided.

2. Seeking optical unit (4) according to Claim 1, wherein the plastics material forms a matrix in which the fibres are embedded.

3. Seeking optical unit (4) according to Claim 1 or 2, wherein the fibres comprise carbon fibres, glass fibres and/or basalt fibres, or wherein the fibres are carbon fibres, glass fibres or basalt fibres.

4. Seeking optical unit (4) according to any of the preceding claims, wherein the plastics material comprises at least one material selected from the following group: epoxy resins, vinyl ester resins, polyurethanes, polyether ketones, polyether ether ketones, or the plastics material consists of at least one material selected from the group.

5. Seeking optical unit (4) according to any of Claims 1 to 4, wherein the actively shape-changeable material (13, P) forms an actuator unit (14) which comprises as actuator elements inversely piezo-active materials (13), in particular piezoelectric crystals (13) and/or fibres which are embedded in the volume material of the at least one optics mount (12) in particular aligned in accordance with at least one preferential direction.

6. Seeking optical unit (4) according to any of Claims 1 to 5, comprising at least one sensor unit (17, 21), which is embedded in particular at least partially in the volume material of the at least one optics mount (12) and/or is disposed on a surface of the at least one optics mount (12), wherein the at least one sensor unit (17, 21) is designed for measuring the ambient temperature and/or for generating sensor signals that are characteristic of shape changes (ΔF) of the at least one optics mount (12).

7. Seeking optical unit (4) according to Claim 6, wherein the at least one sensor unit (21) comprises as sensor elements piezoelectric crystals, piezoelectric fibres and/or one or more resistive strain gauges, inductive displacement sensors, inductive distance sensors, magnetoelastic sensors, capacitive differential sensors and/or fibre-optic temperature sensors.

8. Seeking optical unit (4) according to Claim 6 or 7, furthermore comprising an open-loop controller (15), which is designed for the open-loop control-technological shape adaptation of the at least one optics mount (12) by adapting the actively shape-changeable material (13, P) on the basis of the sensor signals or one or more values or variables, derived therefrom, as reference variable (T, ΔF) and optionally one or more specified open-loop control parameters.

9. Seeking optical unit (4) according to Claim 8, wherein the open-loop controller (15) is designed to ascertain from the sensor signals a variable characteristic of a temperature (T), a variable characteristic of a length change and/or a variable characteristic of a volume change of the at least one optics mount (12), and to use this variable as reference variable.

10. Seeking optical unit (4) according to Claim 6 or 7, furthermore comprising a closed-loop controller (18), which is designed for the closed-loop control-technological shape adaptation of the at least one optics mount (12) by adapting the actively shape-changeable material (13, P) based on the sensor signals (ΔF) or one or more values of variables, derived therefrom, as closed-loop control variable and optionally one or more specified closed-loop control parameters.

11. Seeking optical unit (4) according to Claim 10, wherein the derived value is a value or variable characteristic of the shape of the at least one optics mount (12), a value or variable characteristic of the shape of segments of the at least one optics mount (12), or a value or variable characteristic of corresponding shape changes (ΔF).

12. Seeking optical unit (4) according to any of Claims 1 to 11, wherein the optical system (5) comprises a multistage, in particular two-stage, optical unit (7, 8), and wherein the optical element (9, 10) held in at least one optics mount (12) belongs to one stage (7, 8) and/or the at least one optics mount (12) holds at least one additional optical element (9, 10) of at least one stage (7, 8).

13. Seeking optical unit (4) according to Claim 12, wherein the optical system (5) comprises a two-stage optical unit (7, 8), in which the first stage (7) forms a reflective optical unit, in particular a mirror optical unit having a plurality of mirrors, in particular a mirror telescope, and in which the second stage (8) is formed as a refractive optical unit, comprising in particular one or more lenses and/or prisms, wherein the actively shape-changeable material (13, P) of the at least one optics mount (12) preferably holds at least one optical element (9, 10) of the first stage (7).

14. Seeking optical unit (4) according to any of the preceding claims, wherein the optical system (5) comprises a mirror telescope having a primary mirror (9) and a secondary mirror (10), and the assigned at least one optics mount (12) of the mirror telescope forms a spacer (12, 14) for keeping the primary mirror (9) and secondary mirror (10) apart, and wherein the at least one optics mount (12) is in particular embodied such that the relative pose (P₁), in particular the distance (d), of the primary mirror (9) and secondary mirror (10) is adaptively changeable by way of the actively shape-changeable material (13, P) in order to compensate temperature-related and/or acceleration-related distance changes and/or in order to compensate manufacturing and adjustment tolerances.

15. Seeker head (1) having an interface for being mounted to a missile, in particular a guided missile, comprising at least one seeking optical unit (4) according to any of Claims 1 to 14.

16. Missile (21), in particular guided missile (21), having at least one seeker head (1) according to Claim 15 or at least one seeking optical unit (4) according to any of Claims 1 to 14.

## Revendications

1. Optique chercheuse (4) destinée à une tête chercheuse d'engin volant (1), notamment une tête chercheuse d'engin volant guidé, ladite optique chercheuse comprenant un système optique (5) pourvu d'un élément optique (9, 10) orienté en position par rapport à un axe optique (O) et maintenu dans au moins une monture optique (12), l'au moins une monture optique (12) comprenant un matériau à changement de forme actif (13, P) qui permet de modifier la position (P₁) de l'au moins un élément optique (9, 10), situé dans le système optique (5), par rapport à l'axe optique (O) et/ou de modifier la forme d'au moins un élément optique (9, 10) de manière adaptative,
**caractérisée en ce que**
le matériau à changement de forme actif (13, P) de l'au moins une monture optique (12) forme une unité d'actionnement qui comprend, pour le changement de forme actif, une matière synthétique renforcée de fibres dans laquelle sont incorporées des matières inversement piézoactives, électrostrictives et/ou magnétostrictives à la surface de laquelle, ou dans une couche proche de la surface, sont prévues des matières inversement piézoactives, électrostrictives et/ou magnétostrictives.

2. Optique chercheuse (4) selon la revendication 1, la matière synthétique formant une matrice dans laquelle ont incorporées les fibres.

3. Optique chercheuse (4), selon la revendication 1 ou 2, les fibres comprenant des fibres de carbone, des fibres de verre et/ou des fibres de basalte, ou les fibres étant des fibres de carbone, des fibres de verre ou des fibres de basalte.

4. Optique chercheuse (4) selon l'une des revendications précédentes, la matière synthétique comprenant au moins une matière choisie dans le groupe suivant : les résines époxy, les résines d'esters vinyliques, les polyurétanes, les polyéthercétones, les polyétheréthercétone, ou la matière plastique comprenant au moins une matière choisie dans le groupe.

5. Optique chercheuse (4) selon l'une des revendications 1 à 4, le matériau à changement de forme actif (13, P) formant une unité d'actionnement (14) qui, en tant qu'éléments d'actionnement, comprend des matières inversement piézoactives (13), en particulier des cristaux piézoélectriques (13) et/ou des fibres piézoélectriques, qui sont incorporés dans le volume de matériau d'au moins une monture optique (12) en étant orientés notamment suivant au moins une direction préférentielle.

6. Optique chercheuse (4) selon l'une des revendications 1 à 5, comprenant au moins une unité de détection (17, 21) qui est incorporée notamment au moins partiellement dans le volume de matériau de l'au moins une monture optique (12) et/ou qui est fixée à une surface de l'au moins une monture optique (12), l'au moins une unité de détection (17, 21) étant conçue pour mesurer la température ambiante et/ou pour générer des signaux de détection caractéristiques de changements de forme (ΔF) de l'au moins une monture optique (12).

7. Optique chercheuse (4) selon la revendication 6, l'au moins une unité de détection (21) comprenant, comme éléments de détection, des cristaux piézoélectriques, des fibres piézoélectriques, et/ou un ou plusieurs éléments parmi les jauges de contrainte résistives, les capteurs de déplacement inductifs, les capteurs de distance inductifs, les capteurs magnétoélastiques, les capteurs différentiels capacitifs et/ou les capteurs de température à fibre optique.

8. Optique chercheuse (4) selon la revendication 6 ou 7, comprenant en outre une commande (15) qui est conçue pour l'adaptation de forme, par le biais d'une technique de commande, de l'au moins une monture d'optique (12) par adaptation du matériau à changement de forme actif (13, P) sur la base des signaux de détection ou d'une ou plusieurs valeurs ou grandeurs dérivées de ceux-ci comme grandeurs de référence (T, ΔF) et éventuellement d'un ou plusieurs paramètres de commande spécifiés.

9. Optique chercheuse (4) selon la revendication 8, la commande (15) étant conçue pour déterminer à partir des signaux de détection une grandeur qui est caractéristique d'une température (T), une grandeur qui est caractéristique d'un changement de longueur et/ou une grandeur qui est caractéristique d'un changement de volume de l'au moins une monture optique (12), et pour utiliser cette grandeur comme grandeur de référence.

10. Optique chercheuse (4) selon la revendication 6 ou 7, comprenant en outre une commande (18) qui est conçue pour l'adaptation de forme, par le biais d'une technique de régulation, de l'au moins une monture d'optique (12) par adaptation du matériau à changement de forme actif (13, P) sur la base des signaux de détection (ΔF) ou d'une ou plusieurs valeurs ou grandeurs dérivées de ceux-ci comme grandeur de régulation et éventuellement d'un ou plusieurs paramètres de régulation spécifiés.

11. Optique chercheuse (4) selon la revendication 10, les valeurs dérivées étant des valeurs ou des grandeurs caractéristiques de la forme de l'au moins une monture optique (12), de la forme de segments de l'au moins une monture optique (12), ou de changements de forme correspondants (ΔF).

12. Optique chercheuse (4) selon l'une des revendications 1 à 11, le système optique (5) comprenant une optique (7, 8) à plusieurs étages, notamment à deux étages, et l'élément optique (9, 10) maintenu dans au moins une monture optique (12) appartenant à un étage (7, 8) et/ou l'au moins une monture optique (12) supportant au moins un élément optique supplémentaire (9, 10) d'au moins un étage (7, 8) .

13. Optique de recherche (4) selon la revendication 12, le système optique (5) comprenant une optique (7, 8) à deux étages dans laquelle le premier étage (7) forme une optique réfléchissante, notamment une optique à miroir pourvue d'un pluralité de miroirs, notamment un télescope à miroirs, et dans laquelle le deuxième étage (8) est conçu comme une optique réfractive comprenant notamment une ou plusieurs lentilles et/ou un ou plusieurs prismes, le matériau à changement de forme actif (13, P) de l'au moins une monture optique (12) supportant de préférence au moins un élément optique (9, 10) du premier étage (7).

14. Optique chercheuse (4) selon l'une des revendications précédentes, le système optique (5) comprenant un télescope à miroirs pourvu d'un miroir primaire (9) et d'un miroir secondaire (10), et l'au moins une monture optique associée (12) du télescope à miroirs formant un élément d'espacement (12, 14) destiné à espacer les miroirs primaire (9) et secondaire (10), et l'au moins une monture d'optique (12) étant conçue notamment de telle sorte que, pour compenser les changements de distance liés à la température et/ou à l'accélération et/ou pour compenser les tolérances de fabrication et de réglage, la position relative (P₁), notamment la distance (d), du miroir primaire (9) et du miroir secondaire (10) puisse être modifiée de manière adaptative par le matériau à changement de forme actif (13, P).

15. Tête chercheuse (1) comprenant une interface destinée au montage sur un engin volant, notamment un engin volant guidé, ladite tête chercheuse comprenant au moins une optique chercheuse (4) selon l'une des revendications 1 à 14.

16. Engin volant (21), notamment engin volant guidé (21), comprenant au moins une tête chercheuse (1) selon la revendication 15 ou au moins une optique chercheuse (4) selon l'une des revendications 1 à 14.
